# EUROPÄISCHE PATENTSCHRIFT

(11) **EP 0 925 467 B1**
(45) Veröffentlichungstag und Bekanntmachung des Hinweises auf die Patenterteilung: **05.03.2003**
(21) Anmeldenummer: 97910228.2
(22) Anmeldetag: 27.09.1997
(51) Int. Cl.: F16L 33/207

(54) **SCHLAUCHFASSUNG**
FLEXIBLE HOSE SLEEVE
DOUILLE DE FIXATION POUR FLEXIBLE

(30) Priorität: 27.09.1996 DE 19639794
(43) Veröffentlichungstag der Anmeldung: 30.06.1999
(73) Patentinhaber: Dipl.-Ing. K. Dietzel GmbH, 04626 Beerwalde (DE); Dietzel, Klaus, 47574 Goch (DE)
(72) Erfinder: DIETZEL, Klaus, D-47574 Goch (DE)
(74) Vertreter: König, Reimar, Dr.-Ing.
(86) Internationale Anmeldenummer: DE9702226
(87) Internationale Veröffentlichungsnummer: WO98013637

(56) Entgegenhaltungen:
- EP-A- 0 018 195
- FR-A- 1 495 499
- US-A- 2 279 437
- US-A- 3 017 203
- US-A- 3 530 900

## Beschreibung

Die Erfindung bezieht sich auf einen Schlauchanschluß mit einer Schlauchfassung in Gestalt einer Hülse zur Aufnahme einer Tülle und eines Schlauchendes, mit dem die Hülse verquetscht wird.

Derartige Schlauchfassungen dienen dazu, Schläuche, beispielsweise Hydraulikschläuche mit Anschlüssen an Maschinen lösbar zu verschrauben. Dies geschieht mit Hilfe eines Schlauchanschlusses mit einer in den Schlauch, beispielsweise einen Hochdruckschlauch, eingreifenden mit Außenrillen oder -rippen und einem Anschlagwulst versehenen Tülle und einer am anderen Ende angeordneten Verschraubung mit einer losen Überwurfmutter zum Verschrauben mit einem Gegenanschluß, beispielsweise einem Rohrende. Angesichts der zum Teil hohen bis sehr hohen Drücke im Schlauch bedarf es einer dauerhaften und dem jeweiligen Druck gewachsenen Verbindung zwischen der Fassung bzw. Hülse, dem Schlauchende und der Tülle.

Herkömmliche Schlauchfassungen besitzen daher im Querschnitt etwa dreieckige, quer zu der Längsachse der Schlauchfassung verlaufende Innenrippen, die beim Verquetschen mehr oder minder tief in den nachgiebigen Schlauchwerkstoff eindringen und die Fassung dort verankern.

Die Innenrippen machen die herkömmlichen Schlauchfassungen teuer, weil die Hülsen üblicherweise durch spanende Bearbeitung aus Vollmaterial hergestellt werden. Dabei wird ein Rundstab zunächst abgelängt und alsdann aufgebohrt. Danach werden mit Hilfe eines Spezialwerkzeugs die Innenrippen aus dem noch verbliebenen rohrförmigen Vollmaterial spanend herausgearbeitet.

Diese Verfahrensweise ist außerordentlich zeit- und materialaufwendig; denn der Materialanteil der fertigen Fassung macht nur etwa 25 bis 30% des ursprünglichen Volumens des abgelängten Stababschnitts aus. Demzufolge gehen etwa 70 bis 75% des Ausgangsvolumens in Form von Spänen verloren. Darüber hinaus kommen als Werkstoff für die Schlauchfassung nur gut zerspanbare, mithin höhere Gehalte an Blei, Schwefel und/oder Selen enthaltende Stähle in Frage. Je nach dem speziellen Verwendungszweck wäre es jedoch wünschenswert, in der Werkstoffauswahl freier zu sein. Hinzu kommt, daß es unter dem Einfluß des Wärmeeinbringens beim Löten oder Schweißen zu Gefügeänderungen kommen kann, bei denen die Werkstoffestigkeit verlorengeht.

Bei der Verwendung von Rohren zum Herstellen von Schlauchanschlüssen durch spanende Innenbearbeitung ist zwar der Materialverlust erheblich geringer. Daraus resultiert jedoch kein wesentlicher Kostenvorteil, weil die Rohre eine verhältnismäßig große Wanddicke besitzen müssen und als Ausgangsmaterial generell erheblich teurer sind als Rundstäbe gleichen Durchmessers. Um die Innenrippen aus der Rohrwandung durch Spanen herausarbeiten zu können, sind nämlich entsprechend dickwandige Rohre erforderlich.

Bekannt ist aus der französischen Patentschrift 1 495 499 auch bereits eine Schlauchfassung für einen Schlauchanschluß, die aus einer Hülse und einem Ring mit nach innen gerichteten Vorsprüngen besteht. Im auf eine Tülle montierten Zustand ist der Ring zwischen Hülse und Schlauch angeordnet. Abgesehen davon, daß diese Schlauchfassung zweiteilig. ist und daher verhältnismäßig hohe Fertigungskosten verursacht, besteht hier die Gefahr, daß sich der Ring in oder aus der Hülse löst und es so zu Undichtigkeiten kommt.

Der Erfindung liegt das Problem zugrunde, einen Schlauchanschluß mit einer Schlauchfassung zu schaffen, die sich bei geringem Materialverlust oder auch ohne Materialverlust mit geringem zeitlichem Aufwand herstellen läßt.

Die Lösung dieses Problems besteht in einem Schlauchanschluß mit einer Schlauchfassung aus einer aus beispielsweise kaltgewalztem Tiefziehblech oder -band bestehenden Hülse aus einem zu einem Zylinder gebogenen und an der Stoßkante über quer zu ihrer Längsachse verlaufende, in komplementäre Ausnehmungen eingreifende Zungen dauerhaft verbundenen Blechzuschnitt mit nach innen weisenden, kaltgeformten Vorsprüngen, beispielsweise in Gestalt von umlaufenden Spitzen, Ausstülpungen und Innenrippen.

Eine derartige Schlauchfassung läßt sich aus entsprechend bemessenen rechteckigen Blechzuschnitten unter Verwendung von Kaltband herstellen, dessen Breite der Länge einer Zuschnittkante entspricht. Durch bloßes Unterteilen des Bandes mit Hilfe einer Schere lassen sich die Zuschnitte auf einfache Weise mit beliebiger Länge zwei ihrer Kanten herstellen; sie werden alsdann mit Hilfe eines Kaltarbeitswerkzeuges auf einer Seite mit den Vorsprüngen versehen. Dies kann beispielsweise mit Hilfe einer Rolle geschehen, die mit Rippen versehen ist und die Innenrippen aus dem Blechzuschnitt herausdrückt. Auf diese Weise ergibt sich ein Zuschnitt, der auf der einen Seite mit Rillen und auf der anderen Seite mit Rippen versehen ist Statt der Rippen oder auch zusätzlich kann der Zuschnitt - unter Verwendung einer Art Stachelrolle - durch Kaltverformen mit Eindrückungen und auf der anderen Seite mit Spitzen versehen werden.

Der kaltverformte Zuschnitt wird anschließend zu einem Zylinder gebogen. Die Stoßkanten werden alsdann durch Verschweißen oder Verlöten dauerhaft miteinander verbunden. Vor dem Biegen kann der Zuschnitt jedoch auch noch in der Richtung quer zur Hülsenachse einseitig abgekantet werden, um eine einseitige, bis auf eine kleinere Öffnung geschlossene Hülse herzustellen.

Um die Haltbarkeit und die Formbeständigkeit der Hülse beim Löten oder Schweißen zu verbessern, können die Stoßkanten auch mäanderartig verlaufen. Ein solcher Stoßkantenverlauf ergibt sich, wenn der Zuschnitt im Bereich einer Stoßkante durch Stanzen mit Zungen und die gegenüberliegende Zuschnittseite mit komplementären, etwa Ω-förmigen Ausnehmungen versehen ist. Die beiden einander gegenüberliegenden Kanten brauchen nicht konturen- bzw. deckungsgleich zu verlaufen; denn es erhöht die Festigkeit der beim Biegen zu einem Zylinder entstehenden zunächst formschlüssigen Verbindung an der Stoßstelle, wenn es hier zu einer Kaltverformung oder auch Kaltverschweißung an den einander berührenden Kanten des Zuschnitts kommt.

Beim Herstellen der Hülse kann ein einseitig abgekanteter Zuschnitt so verformt werden, daß die Hülse einen nach innen weisenden Kragen erhält. Dabei kommt es wegen des erheblich geringeren freien Querschnitts des Kragens zu einer erheblichen Materialverformung mit einer entsprechend hohen Kaltverfestigung. Dies läßt sich jedoch weitgehend vermeiden, wenn die beim Abkanten entstehende Zuschnittkante zunächst durch Stanzen mit beispielsweise keilförmigen Einschnitten versehen wird, deren einander gegenüberliegenden Kanten beim Kaltformen des Kragens aneinander zu liegen kommen.

Die erfindungsgemäße Schlauchfassung eignet sich insbesondere für Schlauchanschlüsse, wie sie in den Unterlagen der deutschen Patentanmeldung 196 18 819.9 beschrieben sind.

Diese Schlauchanschlüsse bestehen aus einem Rohrstück, das einerseits als übliche Tülle ausgebildet ist, verschraubungsseitig jedoch über einen Außenwulst in eine Außensicke übergeht. Beides läßt sich ohne weiteres durch bloßes Kaltverformen, im wesentlichen durch Aufweiten und etwa axiales Drücken nach Art eines Einwärtsfaltens herstellen.

Da die Sicke - im Gegensatz zu einer herkömmlichen Rille für einen O-Ring - nicht spanend eingebracht oder mit Hilfe eines Hartmetallwerkzeugs eingerollt zu werden braucht, sondern durch Stauchen bzw. Drücken im Wege eines Einwärtsfaltens hergestellt wird, ergibt sich ohne großen Aufwand ein günstiger Sickenquerschnitt.

Die Sicke befindet sich vorzugsweise am Fuß einer trichterförmigen Aufweitung, die den Übergang zu dem Querschnitt des Gegenanschlusses bzw. Rohrendes schafft.

Dabei kann der Schlauchanschluß verschraubungsseitig in etwa die Gestalt zweier über eine Einschnürung miteinander verbundener Konen besitzen. Die Sicke verläuft dann im Bereich der Einschnürung und besitzt vorteilhafterweise einen dreieckförmigen Querschnitt, der beim Verschrauben mit dem Gegenanschluß mehr oder minder vollständig von dem dann stark verformten Dichtungsring ausgefüllt wird.

Eine mit Spitzen versehene Schlauchfassung ergibt eine besonders feste Verbindung, weil die Spitzen in die rautenförmigen Maschen des Schlauchgewebes eingreifen. Die Zerreißfestigkeit ist besonders hoch, wenn es sich dabei um ein Drahtgewebe oder -geflecht handelt.

Um beim Anformen des Innenkragens ein trichterförmiges Aufweiten der Hülse zu vermeiden, kann im Bereich der Biegekante eine Ringscheibe angeordnet sein, um die sich beim Herstellen des Innenkragens der abgekantete Streifen des Blechs herumlegt.

Die Schlauchfassung kann im Innern auch mit einem oder mehreren Anschlägen für das Schlauchende versehen sein, um das Schlauchende in einem gewissen Abstand von dem Innenkragen zu halten. Dieser Abstand ermöglicht beim Verquetschen des Schlauchs mit dem Anschlußnippel einerseits und der Hülse andererseits ein axiales Wachsen in den Freiraum zwischen den Anschlägen und dem Innenkragen.

Da die erfindungsgemäße Schlauchfassung ausschließlich durch Verformen hergestellt wird und allenfalls beim Stanzen von Ausnehmungen an einer oder an mehreren Kanten des Blechzuschnitts ein geringer Materialverlust eintritt, sind die Herstellungskosten im Vergleich zu einem Herstellen aus Vollmaterial durch spanende Bearbeitung sehr gering.

Die Erfindung wird nachfolgend anhand von in der Zeichnung dargestellten Ausführungsbeispielen des näheren erläutert. In der Zeichnung zeigen:
- Fig. 1: einen fertig bearbeiteten Blechzuschnitt mit geraden Längskanten,
- Fig. 2: einen axialen Längsschnitt durch eine aus dem Zuschnitt der Fig. 1 geformte Hülse,
- Fig. 3: einen mit Rillen und Rippen versehenen, fertig bearbeiteten Blechzuschnitt mit sägezahnartiger Längskante
- Fig. 4: einen axialen Längsschnitt durch eine aus dem Blechzuschnitt der Fig. 3 geformte Hülse,
- Fig. 5: eine Draufsicht auf die Hülse der Fig. 1 in axialer Richtung,
- Fig. 6: einen Schlauchanschluß mit einer erfindungsgemäßen Schlauchfassung,

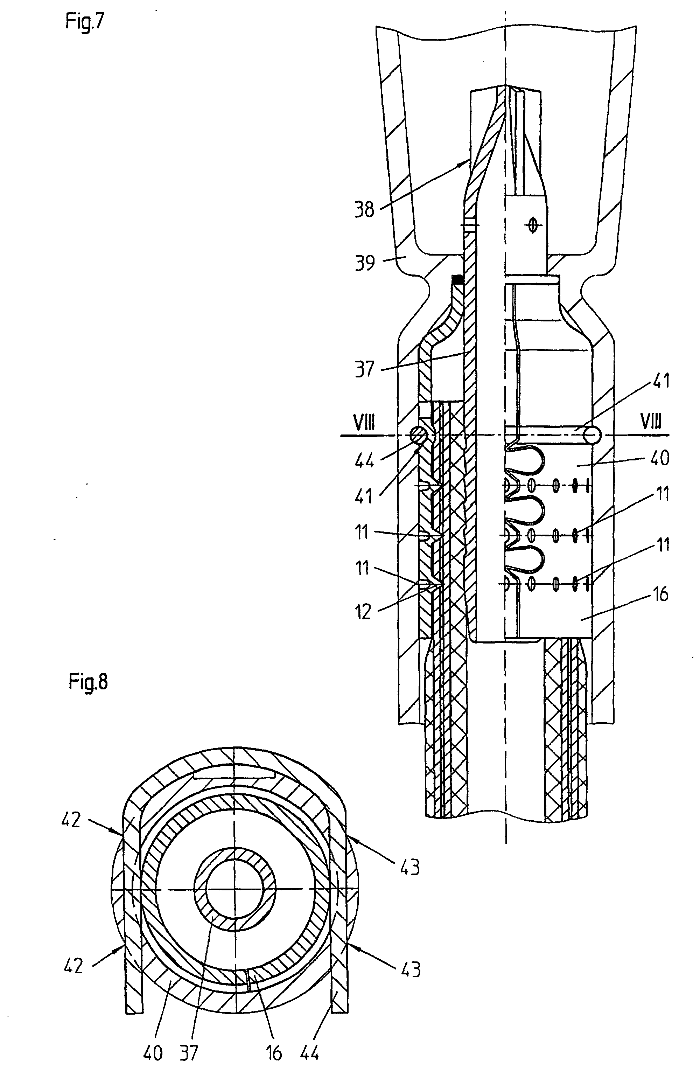

- Fig. 7: eine erfindungsgemäße Schlauchfassung mit einer Tülle, deren freies Ende als Düse ausgebildet ist und
- Fig. 8: einen Schnitt nach der Linie VIII-VIII in Fig. 7.

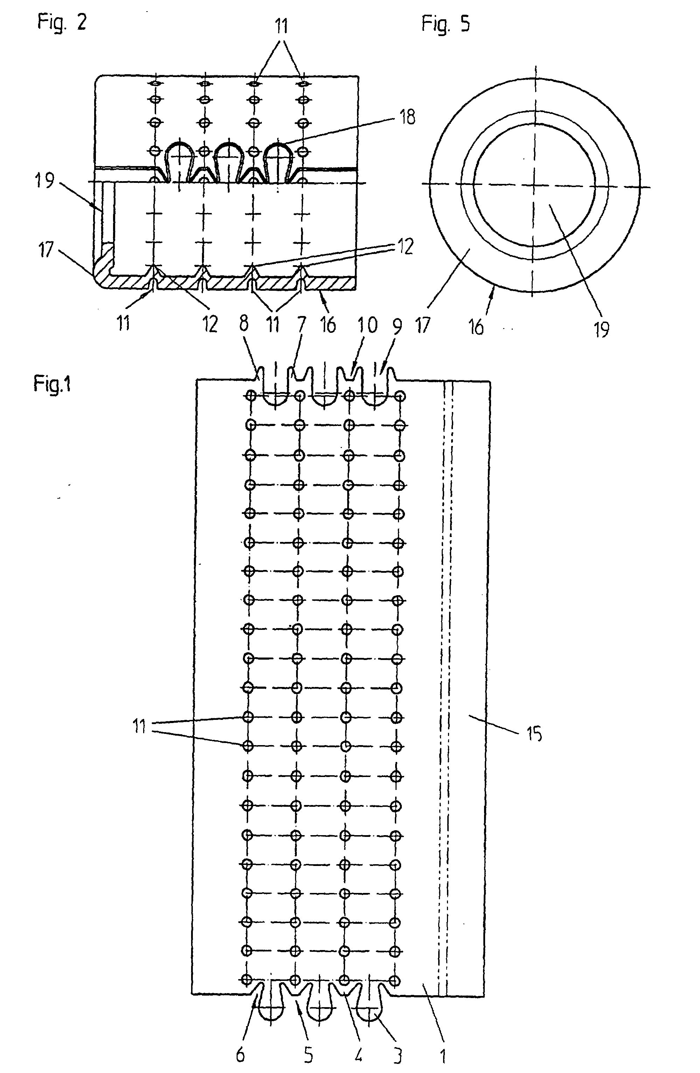

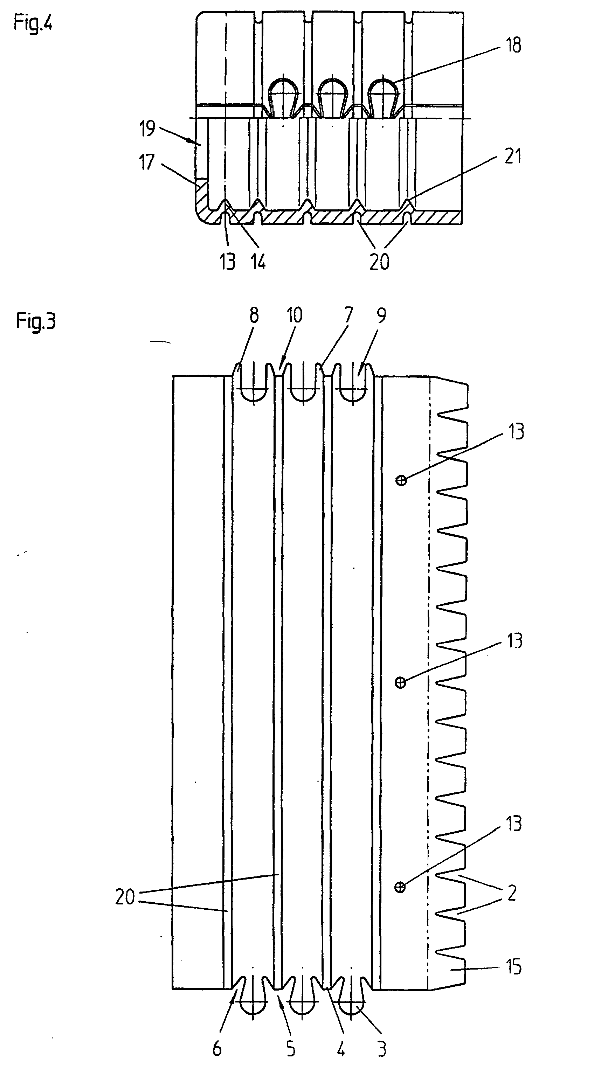

Der Blechzuschnitt 1 besitzt zwei durchgehende, gerade Kanten (Fig. 1) oder ist an einer Kante mit keilförmigen Einschnitten 2 versehen (Fig. 3). Die Zuschnitte weisen an einer Kante Zungen 3,4 sowie Ausnehmungen 5,6 auf. In diese Ausnehmungen greifen Zungen 7,8 an der gegenüberliegenden Kante des Zuschnitts 1 ein, während die Zungen 3,4 in entsprechende Ausnehmungen 9,10 an der ihnen gegenüberliegenden Zuschnittkante eingreifen.

Der Zuschnitt 1 ist mit Eindrückungen 11 und entsprechenden Spitzen 12 oder Ausstülpungen versehen. Außerdem besitzt der Zuschnitt 1 besondere Eindrückungen 13 mit Spitzen 14, die als Anschläge für die Stirnkante eines Schlauchs dienen. Vor dem Rollen bzw. Biegen des Zuschnitts 1 wird ein Randstreifen 15 abgekantet, so daß beim Biegen des Zuschnitts zu einem zylindrischen Körper eine Hülse 16 mit einem Innenkragen 17 und nach innen weisenden Spitzen 12,14 entsteht.

Die Laschen 3,4,7,8 und die komplementären Ausnehmungen 5,6,9,10 halten die Hülse 16 nach dem Biegen formschlüssig zusammen und ergeben einen teils gerade, teils mäanderförmig verlaufenden Stoß 18, der sich durch Schweißen, beispielsweise Laserschweißen oder durch Löten leicht verschließen läßt.

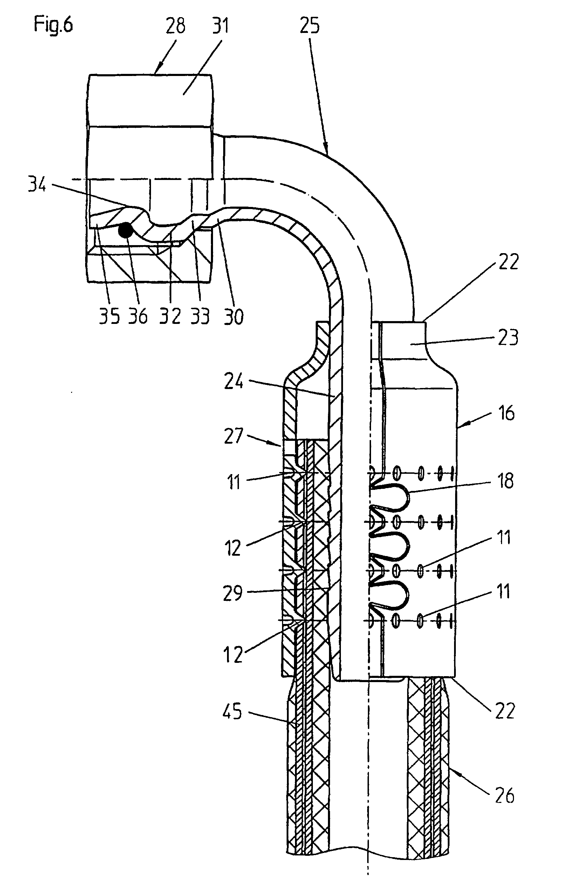

Besitzt der Zuschnitt 1 Einschnitte 2 (Fig. 3), dann verschwinden beim Biegen des Zuschnitts die Einschnitte, und es entsteht eine Öffnung 19 mit einem geschlossenen Rand (Fig. 3,5) wie bei der Verwendung eines Zuschnitts ohne Randeinschnitte (Fig. 1,2). Die Öffnung ist für eine nicht dargestellte Tülle bestimmt, die ebenso wie die Hülse 16 mit einem Schlauchende so verquetscht wird, daß die Spitzen 12 in die Wandung des Schlauchs eindringen. Die Spitzen 12 sind so bemessen, daß sie bis in das übliche Schlauchgewebe eindringen und sich gleichsam mit den Maschen des Gewebes verhaken.

Anstelle der Eindrückungen 11 und der Spitzen 12 kann der Zuschnitt 1 auch mit Rillen 20 und entsprechenden Rippen 21 versehen sein.

Ein Zuschnitt mit einander gegenüberliegenden geraden Kanten 22 kann auch beim Einrollen bzw. Biegen an einer Seite so geformt werden, daß sich eine flaschenhalsartige Verjüngung 23 ergibt, die eine Tülle 24 in Gestalt des einen Endes eines 90°-Bogens 25 flächig umschließt und mit diesem verschweißt oder verlötet ist. Dabei entsteht ein ringförmiger Zwischenraum zum losen Einstecken eines Schlauchs 26, der mit der Tülle 24 und der Hülse 16 in üblicher Weise verquetscht wird.

Um den Schlauch 26 genau positionieren zu können, ist die Hülse 16 mit einem Schauloch 27 versehen.

Der Schlauchanschluß besteht aus dem Rohrstück bzw. Rohrbogen 25 mit der Tülle 24 am einen und einer Verschraubung 28 am anderen Ende, die über einen gebogenen Mittelabschnitt miteinander verbunden sind.

Die Tülle 24 ist in üblicher Weise beispielsweise durch Einkratzen mit Außenrippen 29 und mit einem Anschlagwulst 30 versehen, vor dem eine lose Überwurfmutter 31 angeordnet ist.

Verschraubungsseitig besitzt der Schlauchanschluß einen nach außen weisenden Wulst 32, der mehr oder minder stetig in eine dreieckförmige Sicke 33 bzw. einen Innenwulst 34 und sodann in eine trichterförmige Aufweitung 35 übergeht.

In der Sicke 33 befindet sich ein O-Ring 36 verhältnismäßig großen Querschnitts, der nach dem Verschrauben unter dem Einfluß des Gegenanschlusses in starkem Maße verformt wird und dabei die Sicke 33 mehr oder minder ausfüllt. Auf diese Weise ergibt sich eine auch sehr hohen Drücken gewachsene dichte Verbindung.

An die Stelle der Tülle 24 mit einer Rohrverschraubung kann auch eine gerade Tülle 37 treten, deren freies Ende als Düse 38 ausgebildet ist und in einen Trichter 39 mündet, der mit einer Aufnahme 40 für die Hülse 16 versehen ist. Um den Trichter 39 lösbar mit der Schlauchfassung zu verbinden, besitzt die Hülse 16 eine umlaufende Rille 41, in die ein durch Lochpaare 42,43 der Aufnahme 40 gesteckter Bügel 44 eingreift.

Beim Herstellen der erfindungsgemäßen Schlauchfassung ist kein großer Aufwand erforderlich; denn es braucht lediglich von einem Band mit der Breite des Zuschnitts 1 ein entsprechendes Stück abgetrennt zu werden. Der Zuschnitt kann dann in einem einzigen Arbeitsgang durch Stanzen und Prägen mit der aus den Fig. 1,3 ersichtlichen Kantenstruktur sowie den Eindrückungen 11,13 versehen und gegebenenfalls abgekantet werden. In einem zweiten Arbeitsschritt wird dann der Zuschnitt zu einer zylindrischen Hülse 16 gebogen bzw. gerollt, wonach dann nur noch die einander berührenden Kanten des Zuschnitts miteinander verschweißt oder verlötet werden müssen. Die dabei entstehende Schlauchfassung läßt sich in herkömmlicher Weise mit einer Tülle versehen und mit einem Schlauchende verquetschen. Dabei dringen die Vorsprünge bzw. die Spitzen 12,21 in das Schlauchmaterial ein und erreichen - bei entsprechender Länge - schließlich das in den Schlauch 26 eingebettete Stahlgeflecht 45. Auf diese Weise verhaken sich die Spitzen mit dem Geflecht, so daß sich ein Verbund ergibt, dessen Haltekraft ein Vielfaches herkömmlicher Schlauchanschlüsse beträgt.

## Patentansprüche

1. Schlauchanschluß mit einer Schlauchfassung aus
- einer Hülse (16) aus einem zu einem Zylinder gebogenen und an den Stoßkanten über quer zu ihrer Längsachse verlaufende, in komplementäre Ausnehmungen (5, 6, 9, 10) eingreifende Zungen (3, 4, 7, 8) dauerhaft verbundenen Blechzuschnitt (1)
- mit nach innen weisenden, kaltgeformten Vorsprüngen (12, 21).

2. Schlauchanschluß nach Anspruch 1, **gekennzeichnet durch** nach innen weisende Spitzen (12).

3. Schlauchanschluß nach Anspruch 1 oder 2, **gekennzeichnet durch** umlaufende Innenrippen (21).

4. Schlauchanschluß nach einem der Ansprüche 1 bis 3, **gekennzeichnet durch** mindestens eine kaltgeformte Außenrille (20,41).

5. Schlauchanschluß nach Anspruch 4, **dadurch gekennzeichnet, daß** die Ausnehmungen (5, 6; 9, 10) und die Zungen (3, 4; 7, 8) eine Ω-förmige Kontur besitzen.

6. Schlauchanschluß nach einem der Ansprüche 1 bis 5, **gekennzeichnet durch** einen abgekanteten Innenkragen (17).

7. Schlauchanschluß nach Anspruch 6, **dadurch gekennzeichnet, daß** am Innenkragen (17) eine Ringscheibe anliegt.

8. Schlauchanschluß nach Anspruch 6 oder 7, **dadurch gekennzeichnet, daß** der Innenkragen (17) eine sägezahnförmige Kante besitzt.

9. Schlauchanschluß nach einem der Ansprüche 1 bis 5, **gekennzeichnet durch** eine Hülse (16) mit einem flaschenhalsartigen Ende (23).

10. Schlauchanschluß nach einem der Ansprüche 1 bis 9, **gekennzeichnet durch** eine Hülse (16) mit einem Schauloch (27).

11. Schlauchanschluß nach einem der Ansprüche 1 bis 10, **gekennzeichnet durch** ein Rohrstück (25) mit einer Tülle (24) und einer Verschraubung (28), das verschraubungsseitig über einen Außenwulst (32) in eine Außensicke (33) übergeht.

12. Schlauchanschluß nach Anspruch 11, **gekennzeichnet durch** ein nahtloses Rohrstück (24,25).

13. Schlauchanschluß nach Anspruch 10 oder 11, **dadurch gekennzeichnet, daß** sich die Sicke (33) am Fuß einer trichterförmigen Aufweitung (35) befindet.

14. Schlauchanschluß nach einem der Ansprüche 10 bis 13, **gekennzeichnet durch** ein verschraubungsseitiges Rohrende in Gestalt zweier über eine Einschnürung (34) miteinander verbundener Konen (32, 35).

15. Schlauchanschluß nach einem der Ansprüche 10 bis 14, **dadurch gekennzeichnet, daß** das Rohrstück (24, 25) aus einem tiefziehfähigen Stahl besteht.

## Claims

1. Hose connector with a hose mounting comprising
- a sleeve (16) made from a sheet metal cut-out (1) formed into a cylinder and permanently bound at the abutting edges by means of tongues (3, 4, 7, 8) running transverse to its longitudinal axis and engaging in complementary recesses (5, 6, 9, 10)
- with inward facing cold-formed projections (12, 21).

2. Hose connector according to Claim 1, **characterised in that** it has points (12) facing inwards.

3. Hose connector according to Claim 1 or 2, **characterised in that** it has encircling internal ribs (21).

4. Hose connector according to one of the claims 1 to 3, **characterised in that** it has at least one cold-formed external groove (20, 41).

5. Hose connector according to Claim 4, **characterised in that** the recesses (5, 6, 9, 10) and the tongues (3, 4, 7, 8) have an Ω-shaped contour.

6. Hose connector according to one of the claims 1 to 5, **characterised in that** it has a folded inner collar (17).

7. Hose connector according to Claim 6, **characterised in that** a ring-shaped disk lies against the inner collar (17).

8. Hose connector according to Claim 6 or 7, **characterised in that** the inner collar (17) has a sawtooth-shaped edge.

9. Hose connector according to one of the claims 1 to 5, **characterised in that** it has a sleeve (16) with a bottleneck-shaped end (23).

10. Hose connector according to one of the claims 1 to 9, **characterised in that** it has a sleeve (16) with an inspection hole (27).

11. Hose connector according to one of the claims 1 to 10, **characterised in that** it has a pipe section (25) with a spout (24) and a screw connection (28) which on the screw connection side gives way via an external swelling (32) to an external bead (33).

12. Hose connector according to Claim 11, **characterised in that** it has a seamless pipe section (24, 25).

13. Hose connector according to Claim 10 or 11, **characterised in that** the bead (33) is situated at the foot of a funnel-shaped expansion (35).

14. Hose connector according to one of the claims 10 to 13, **characterised in that**, on the screw connection side, it has a pipe end in the shape of two cones (32, 35) connected to one another via a constriction (34).

15. Hose connector according to one of the claims 10 to 14, **characterised in that** the pipe section (24, 25) is made from a steel capable of being deep-drawn.

## Revendications

1. Raccord de flexible avec une monture de flexible comprenant
- un manchon (16) constitué d'une partie découpée en tôle (1) pliée en forme de cylindre et relié de façon permanente sur les rebords au moyen de languettes (3, 4, 7, 8) disposées transversalement par rapport à leur axe longitudinal et s'engageant dans des évidements (5, 6, 9, 10) complémentaires
- avec des parties saillantes (12, 21) dirigées vers l'intérieur et formées à froid.

2. Raccord de flexible selon la revendication 1 **caractérisé par** des pointes (12) dirigées vers l'intérieur.

3. Raccord de flexible selon la revendication 1 ou 2, **caractérisé par** des nervures intérieures (21) périphériques.

4. Raccord de flexible selon l'une quelconque des revendications 1 à 3, **caractérisé par** au moins une rainure extérieure (20, 41) formée à froid.

5. Raccord de flexible selon la revendication 4, **caractérisé en ce que** les évidements (5, 6, 9, 10) et les languettes (3, 4 ; 7, 8) présentent un contour en forme de Ω.

6. Raccord de flexible selon l'une quelconque des revendications 1 à 5, **caractérisé par** un col intérieur (17) replié.

7. Raccord de flexible selon la revendication 6, **caractérisé en ce qu'**un disque annulaire s'appuie sur le col intérieur (17).

8. Raccord de flexible selon la revendication 6 ou 7, **caractérisé en ce que** le col intérieur (17) présente un bord en forme de dents de scie.

9. Raccord de flexible selon l'une quelconque des revendications 1 à 5, **caractérisé par** une douille (16) avec une extrémité (23) en forme de col de bouteille.

10. Raccord de flexible selon l'une quelconque des revendications 1 à 9, **caractérisé par** une douille (16) avec un trou de regard (27).

11. Raccord de flexible selon l'une quelconque des revendications 1 à 10, **caractérisé par** un bout de tuyau (25) avec un passe-câble (24) et un raccord vissé (28), qui passe côté raccord vissé d'un renflement extérieur (32) à une moulure extérieure (33).

12. Raccord de flexible selon la revendication 11, **caractérisé par** un bout de tuyau (24, 25) sans soudure.

13. Raccord de flexible selon la revendication 10 ou 11, **caractérisé en ce que** la moulure (33) se trouve à la base d'un élargissement (35) en forme d'entonnoir.

14. Raccord de flexible selon l'une quelconque des revendications 10 à 13, **caractérisé par** une extrémité de tuyau côté raccord vissé sous la forme de deux cônes (32, 35) reliés entre eux par un rétrécissement (34).

15. Raccord de flexible selon l'une quelconque des revendications 10 à 14, **caractérisé en ce que** le bout de tuyau (24, 25) est à base d'un acier apte à l'emboutissage profond.
